# EUROPEAN PATENT APPLICATION

(11) **EP 1 355 060 A2**
(43) Date of publication of application: **22.10.2003**
(21) Application number: 03252436.5
(22) Date of filing: 16.04.2003
(51) Int. Cl.: F02M 59/46, F16K 17/04, F16K 17/168

(54) **Pressure relief device**

(30) Priority: 19.04.2002 GB 0208969
(71) Applicant: Delphi Technologies, Inc., Troy, MI 48007 (US)
(72) Inventor: Bucley, P., Kent ME8 9ES (GB)
(74) Representative: Keltie, David Arthur

(57) **Abstract**

A pressure relief device comprises a housing (11) defining a chamber (12) for receiving a fluid under pressure, and a plug (16) at least partially disposed within an opening (14) through the housing. The plug (16) has a cross-section which provides an interference fit with the opening (14) and is disposed within the opening (14) as a result of an insertion force with which the plug (16) is inserted into the opening (14), externally from the housing (11). The force determines a relief pressure equal to the pressure required to urge the plug (16) outwardly of the housing (11).

## Description

The present invention relates to a pressure relief device for protecting a fluid system against excess pressure.

A fuel supply system for an internal combustion engine typically comprises one or more pumps for delivering fuel at a high pressure to one or more outlets, for example fuel injectors in an engine. A problem arises if the pressure of the fuel rises above the safe operating pressure of any of the system components, for example if an outlet becomes blocked. A pressure relief device may be employed to protect the system, or one or more components thereof, by opening a relief passage when the fuel pressure exceeds a predetermined level.

Typical fuel supply systems include Electronic Unit Pumps (EUP) or Electronic Unit Injectors (EUI), each of which provides fuel to an associated engine cylinder. An injection nozzle of each EUP or EUI system is individually controlled by a dedicated actuator arrangement. In these systems it is desirable for each cylinder to have its own dedicated pressure relief protection. Other fuel supply systems are of the common rail type where fuel is supplied from a common high pressure pump to the cylinders through a common manifold, and where the pressure is controlled by a regulator valve.

Known pressure relief devices employ a fusible element, such as a burst disc. These devices are designed to burst if the pressure exceeds a set relief pressure. The relief pressure must have a minimum setting above the maximum operating pressure of the system plus a further tolerance value. The tolerance value allows for the effects of manufacturing tolerances and variances in material strength, both of which can vary considerably. The actual relief pressure of these devices is therefore unknown and considerably higher than the maximum working pressure.

According to a first aspect of the present invention, there is provided a pressure relief device comprising:
a housing defining a chamber for receiving a fluid under pressure, and a plug member at least partially disposed within an opening through the housing, wherein the plug member has a cross-section which provides an interference fit with the opening and is disposed within the opening as a result of an insertion force with which the plug member is inserted into the opening, externally from the housing, the force determining a relief pressure equal to the pressure required to urge the plug member outwardly of the housing.

Preferably, the housing further comprises an inlet for fluid communication with a pressurised fluid system.

The opening may be provided for fluid communication with a pressure relief passage when the plug member is urged outwardly from the housing.

An advantage of the device is that the relief pressure can be set accurately by inserting the plug member into the opening with a precise, known insertion force.

) According to a second aspect of the present invention there is provided a pressure relief valve comprising:
a valve body having an inlet passage for fluid communication with a pressurised fluid system,
an outlet passage,
a valve member extending through the valve body and moveable between an open position and a closed position for providing and preventing respectively fluid communication between the inlet and outlet passages,
a chamber in fluid communication with the inlet passage, and
a plug member having a surface defining at least part of a wall of the chamber, the plug member having a cross-section which provides an interference fit with an opening and being disposed within the opening as a result of an insertion force with which the plug member is inserted into the opening, externally from the valve body, the plug member being urgeable by means of fluid pressure within the chamber above a predetermined level, to cause movement of the valve member from the closed position to the open position.

In a preferred embodiment, the pressure relief valve further comprises an actuator energiseable to hold the valve member in the closed position.

Preferably, the pressure release valve further comprises biasing means for biasing the valve member towards the open position.

In a preferred embodiment, the chamber and the plug member are disposed within the valve member, the plug member having an outer surface for engaging an abutment, whereby the plug member is urgeable against the abutment by fluid pressure within the chamber above the predetermined level so as to move the valve member towards the open position.

Embodiments of the invention may include valves for use as spill valves in an EUP or EUI system. These systems operate with multi-cylinder engines. In the event of a fault in the supply to one cylinder resulting in the pressure rising above the pre-set relief pressure, the plug member in the spill valve will be urged outwardly to open the spill valve and thereby disable the faulty cylinder, without affecting the other cylinders. This direct action is faster than other pressure relief systems, which are subject to sensor and actuator response times.

Embodiments may also include pressure relief incorporated into valves used as regulators in common rail type fuel supply systems. In such systems the actuator is energised to close the pressure relief valve and is electronically controlled to be released briefly in response to a pressure transducer signal.

According to a third aspect of the present invention there is provided a method of assembling a pressure relief device for relieving a fluid pressure above a predetermined level, the method comprising:
providing a housing having a chamber for receiving a fluid,
forming an opening through the housing into the chamber,
providing a plug member with a cross-section having an interference fit with the opening,
providing means for inserting the plug member into the opening from outside the housing with a known insertion force, and
inserting the plug member into the opening with the known insertion force.

An embodiment of the present invention will now be described with reference to the accompanying drawings in which:
Figure 1 is a pressure relief device in accordance with the first aspect of the present invention, and
Figure 2 is a pressure relief valve in accordance with the second aspect the present invention.

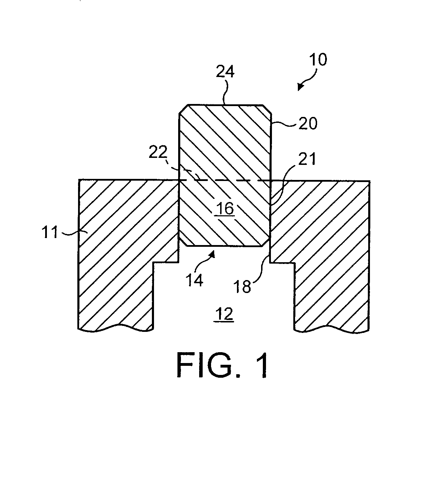

Referring to Figure 1, a pressure relief device 10 comprises a housing 11 which defines a chamber 12 for containing a fluid under pressure. The housing 11 is provided with a bore 18 to define an opening 14 to the chamber 12 from outside the housing 11. A plug member 16 is disposed within the opening 14. The cross-section of the plug 16 is sized so as to provide an interference fit between the plug 16 and the opening 14. As shown in Figure 1, the plug 16 is provided with an outer cylindrical surface 20 having a slightly larger diameter than the bore 18 or the opening 14.

A characteristic of such an interference fit is that the force required to urge the plug 16 into the opening 14 is proportional to a length 21 of engagement between the outer surface 20 of the plug 16 and the bore 18. Thus, the plug 16 can be urged into the opening 14 with a known, pre-set force. This force will have the same magnitude as the force required to urge the plug 16 out of the opening 14. Thus, a known pressure of fluid within the chamber 12 is required to urge the plug 16 out of the opening 14, and this is the set relief pressure of the device 10.

Variations in manufacturing tolerances and material properties have no bearing on the relief pressure as such variations only affect the engaged length 21 between the plug 16 and the opening 14. For a given insertion force applied to the plug 16, the engaged length 21 will depend on the actual material properties, the actual interference fit (taking account of manufacturing tolerances) and the surface finish of the plug surface 20 and the bore 18 of the opening 14.

After insertion of the plug 16 into the opening 14, a portion 24 of the plug 16 of indeterminate length remains outward of the housing 11. The portion 24 of the plug 16 is removed by machining it flush with the housing surface 22, or to another predetermined dimension, depending on design requirements.

In use when the fluid pressure in the chamber 12 exceeds the relief pressure, the plug 16 is urged outwardly of the housing 11 to actuate a pressure release device, e.g. a valve (not shown). For a low pressure system, pressure may be relieved by allowing the plug 16 to move until it is clear of the housing 11. A relief passage (not shown) may be provided for conducting fluid away from the opening 14 when the plug 16 is urged outwardly of the housing 11.

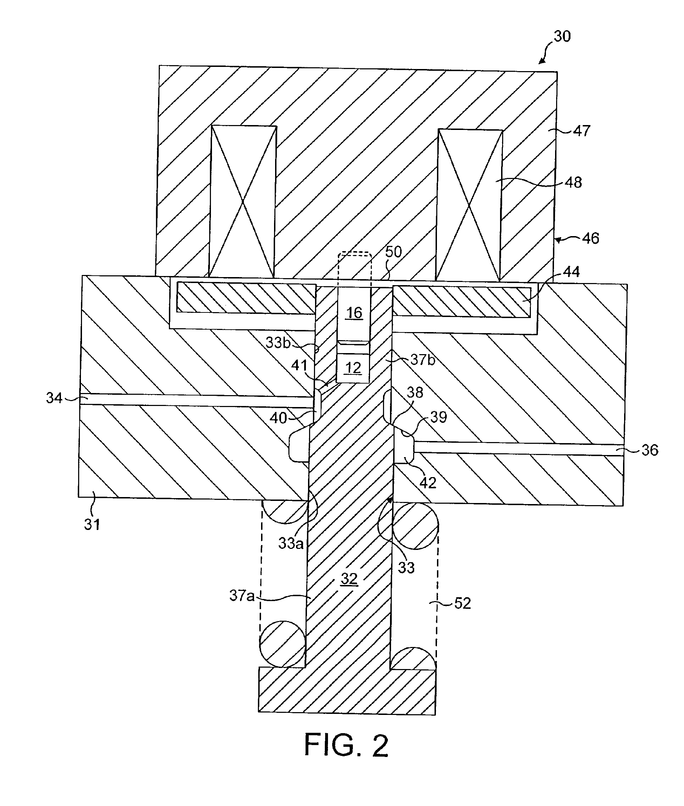

Figure 2 shows a pressure relief valve 30, suitable for use with higher pressure systems and incorporating a device similar to that shown in Figure 1 and described above. The same reference numerals have been used for equivalent features in Figures 1 and 2.

The pressure relief valve 30 has a valve body 31 provided with a bore 33 through which a valve member 32 extends. The bore 33 comprises a first portion 33a having a first diameter and a second portion 33b having a second diameter which is smaller than that of the first portion 33a. The valve member 32 is provided with first and second portions 37a and 37b, having substantially the same diameter as a respective, adjacent one of the bore portions 33a, 33b.

An intermediate region of the valve member 32 between the first and second portions 37a, 37b is provided with a circumferential groove to define a first gallery 40 which communicates with an inlet or passage 34. The inlet passage 34 provides for fluid communication between an external fluid source (not shown) and the first annular gallery 40. The bore 33 in the valve body 31 is shaped to define a second gallery 42. A lower edge of the groove in the valve member 37 defines a seatable valve surface 38 which is engageable with a seating surface 39 defined by the second gallery 42. An outlet pressure relief passage 36 provides for fluid communication between the annular gallery 42 and a low pressure system or drain (not shown).

The valve member 32 is axially moveable within the bore 33a, 33b under the control of an actuator 46 arranged within an actuator housing 47. The actuator 46 includes an electromagnetic winding 48 which is energisable to cause movement of the valve member 32 between a closed position (as shown in Figure 2), in which the seatable valve surface 38 is engaged with the seating surface 39, and an open position in which the valve surface 38 is spaced from the surface 39. When the valve member 32 is in the open position, the inlet passage 34 and the outlet passage 36 are in fluid communication via the galleries 40 and 42 formed in the valve member 32 and the valve body 31 respectively. When the valve member is in the closed position, communication between the inlet passage 34 and the outlet passage 36 is broken.

The actuator 46 includes an armature 44 which extends laterally from the second portion 37b of the valve member 32 and is coupled thereto such that movement of the armature 44 under the influence of a magnetic field generated by the winding 48 causes the valve member 32 to move within the bore 33. A return spring 52 is provided to bias the valve member 32 against closure when the winding 48 is de-energised. When the winding 48 is energised, a force is applied to the armature 44 to move the valve member 32 against the biasing force of the spring 52, into a position in which the valve surface 38 engages the seating surface 39, thereby closing communication between the inlet and outlet passages 34, 36.

The valve member 32 is further provided with a blind drilling to define, in part, a chamber 12 in fluid communication through a passage 41 with the inlet passage 34. A plug 16 having an interference fit with an opening formed in the second portion 37b of the valve member 32 defines an end surface exposed to fluid pressure within the chamber 12. The plug 16 and the chamber 12 are arranged substantially as described above with reference to Figure 1, and are substantially axially aligned within the valve member 32.

In use, the actuator 46 is energised to hold the valve member 32 in its closed position. When the external fluid source provides a fluid pressure in excess of a predetermined pressure (referred to as "relief pressure"), the pressure in the chamber 12 serves to urge the plug 16 in the axial direction outwardly from the bore 33 in the valve member 32 towards the actuator 46. The plug 16 is moved into engagement with an abutment surface 50 of the actuator housing 47, whereupon the fluid pressure in the chamber 12 urges the valve member 32 against the force provided by the actuator 46 so that the valve member 32 is caused to move away from the seating surface 39. This opening of the valve 30 enables communication between the inlet passage 34 and the outlet passage 36, and thereby allows the high pressure fluid to be relieved to the low pressure outlet or drain.

## Claims

1. A pressure relief device (10) comprising:
a housing (11) defining a chamber (12) for receiving a fluid under pressure, and a plug member (16) at least partially disposed within an opening (14) through the housing (11), wherein the plug member (16) has a cross-section which provides an interference fit with the opening (14) and is disposed within the opening (14) as a result of an insertion force with which the plug member (16) is inserted into the opening (14), externally from the housing (11), the force determining a relief pressure equal to the pressure required to urge the plug member (16) outwardly of the housing (11).

2. A pressure relief device (10) as claimed in Claim 1, further comprising an inlet for fluid communication with a pressurised fluid system.

3. A pressure relief device (10) as claimed in Claim 2, wherein the opening (14) is provided for fluid communication with a pressure relief passage when the plug member (16) is urged outwardly from the housing (11).

4. A pressure relief valve (30) comprising:
a valve body (31) having an inlet (34) for fluid communication with a pressurised fluid system,
a pressure relief passage (36),
a valve member (32) extending through the valve body (31) and moveable between an open position and a closed position for providing and preventing respectively fluid communication between the inlet (34) and the pressure relief passage (36),
a chamber (12) in fluid communication with the inlet (34), and
a plug member (16) having a surface defining at least part of a wall of the chamber (12), the plug member (16) having a cross-section which provides an interference fit with an opening (14) and being disposed within the opening (14) as a result of an insertion force with which the plug member (16) is inserted into the opening (14), externally from the valve body (31), the plug member (16) being urgeable by means of fluid pressure within the chamber (12) above a predetermined level to cause movement of the valve member (32) from the closed position to the open position.

5. A pressure relief valve (30) as claimed in Claim 4, further comprising an actuator (46) energiseable to hold the valve member (32) in the closed position.

6. A pressure relief valve (30) as claimed in Claim 5, further comprising biasing means for biasing the valve member (32) towards the open position.

7. A pressure relief valve (30) as claimed in Claim 6, wherein the chamber (12) and the plug member (16) are disposed within the valve member (32), the plug member (16) having an outer surface for engaging an abutment, whereby the plug member (16) is urgeable against the abutment by fluid pressure within the chamber (12) above the predetermined level so as to move the valve member (32) towards the open position.

8. A method of assembling a pressure relief device (30) for relieving a fluid pressure above a predetermined level, the method comprising:
providing a housing (11) having a chamber (12) for receiving a fluid,
forming an opening (14) through the housing (11) into the chamber (12),
providing a plug member (16) with a cross-section having an interference fit with the opening (14),
providing means for inserting the plug member (16) into the opening (14) from outside the housing (11) with a known insertion force, and
inserting the plug member (16) into the opening (14) with the known insertion force.
